(19) **Europäisches Patentamt / European Patent Office / Office européen des brevets**

(11) **EP 1 290 869 B1**

(12) **FASCICULE DE BREVET EUROPEEN**

(45) Date de publication et mention
de la délivrance du brevet:
**01.08.2012 Bulletin 2012/31**

(51) Int Cl.:
***H04N 5/335*** <sup>(2011.01)</sup>

(21) Numéro de dépôt: **01943599.9**

(22) Date de dépôt: **12.06.2001**

(86) Numéro de dépôt international:
**PCT/FR2001/001808**

(87) Numéro de publication internationale:
**WO 2001/097506 (20.12.2001 Gazette 2001/51)**

(54) **PROCEDE DE CONVERSION D'UN SIGNAL ANALOGIQUE EN SIGNAL NUMERIQUE ET DETECTEUR DE RAYONNEMENTS ELECTROMAGNETIQUES UTILISANT CE PROCEDE**

VERFAHREN ZUR UMSETZUNG EINES ANALOGEN SIGNALS IN EIN DIGITALES SIGNAL UND ELEKTROMAGNETSICHER STRAHLUNGSDETEKTOR WELCHER DIESES VERFAHREN BENUTZT

METHOD FOR CONVERTING AN ANALOG SIGNAL INTO A DIGITAL SIGNAL AND ELECTROMAGNETIC RADIATION SENSOR USING SAME

(84) Etats contractants désignés:
**DE FR GB IT**

(30) Priorité: **13.06.2000 FR 0007500**

(43) Date de publication de la demande:
**12.03.2003 Bulletin 2003/11**

(73) Titulaire: **Commissariat à l'Énergie Atomique et aux Énergies Alternatives
75015 Paris (FR)**

(72) Inventeurs:
• **LAFLAQUIERE, Arnaud
Marchmont, Edinburgh EH9 1DL (GB)**

• **BELLEVILLE, Marc
F-38120 Saint-Egrève (FR)**
• **CASTELEIN, Pierre
F-38000 Grenoble (FR)**
• **PANTIGNY, Philippe
F-38640 Claix (FR)**

(74) Mandataire: **Poulin, Gérard et al
BREVALEX
95, rue d'Amsterdam
75378 Paris Cedex 8 (FR)**

(56) Documents cités:
**EP-A- 0 749 234   EP-A- 0 954 167
WO-A-98/14002   US-A- 5 659 315**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**Domaine de l'invention**

L'invention concerne un procédé de conversion d'un signal analogique en un signal numérique lorsque le signal analogique représente une valeur électrique et, en particulier, une charge électrique destinée à être lue. Elle concerne également un détecteur de rayonnements électromagnétiques utilisant ce procédé et, plus précisément, un point élémentaire (PEL) numérique, qui fournit, dès sa sortie, une information numérique destinée à être traitée numériquement.

L'invention trouve des applications dans le domaine de la détection de rayonnements électromagnétiques et, en particulier, des rayonnements infrarouges, pour convertir les rayonnements infrarouges en signaux électriques numériques.

**Etat de la technique**

Dans le domaine de la photodétection, on utilise, classiquement, des senseurs qui assurent la transformation des photosignaux délivrés par les photodétecteurs élémentaires en signaux électriques. Cette transformation est, le plus souvent, réalisée en partie grâce à un ensemble de fonctions analogiques établies sur un circuit intégré, appelé "circuit de lecture".

Les photodétecteurs peuvent être réalisés directement sur un même circuit de lecture, ce qui est le cas des photodiodes ou des photogrilles des senseurs CMOS opérant dans la bande spectrale visible.

Ils peuvent aussi être réalisés dans une filière technologique spécifique, puis reportés sur le circuit de lecture par des techniques d'hybridation, ce qui est le cas, par exemple, des photodétecteurs, dits "quantiques", opérant dans la bande spectrale infrarouge.

Les photodétecteurs peuvent aussi être fabriqués directement sur le circuit de lecture par croissance d'un matériau spécifique, comme c'est le cas pour les microbolomètres résistifs opérant dans la bande spectrale infrarouge.

Quelle que soit la technique dans laquelle ils ont été réalisés, les senseurs comportent une matrice de points élémentaires, appelés "PEL", connectés en ligne et en colonne. Chaque PEL comprend un photodétecteur qui réalise une première conversion du photosignal en une grandeur susceptible d'être traitée par le circuit de lecture, c'est-à-dire un courant, une tension ou une charge. Ainsi, à chaque photodétecteur est associé un PEL.

Les PEL peuvent être de type intégrateur, c'est-à-dire que les charges issues du photodétecteur qui lui est associé, sont intégrées dans un moyen de stockage des charges, appelé "intégrateur" et fournissant, à sa sortie, une tension.

Classiquement, dans une matrice de PEL, tous les PEL d'une même colonne se partagent un même bus-colonne.

Les sorties des PELs sont connectées au bus-colonne, à tour de rôle par un multiplexage dynamique. L'extrémité de chaque bus-colonne est connectée sur un bus-ligne qui conduit les différents signaux à l'étage de sortie. C'est donc par l'intermédiaire de ces bus-colonnes que sont acheminées les grandeurs électriques jusqu'au bout de la colonne, puis jusqu'à l'étage de sortie qui assure le traitement de ces signaux.

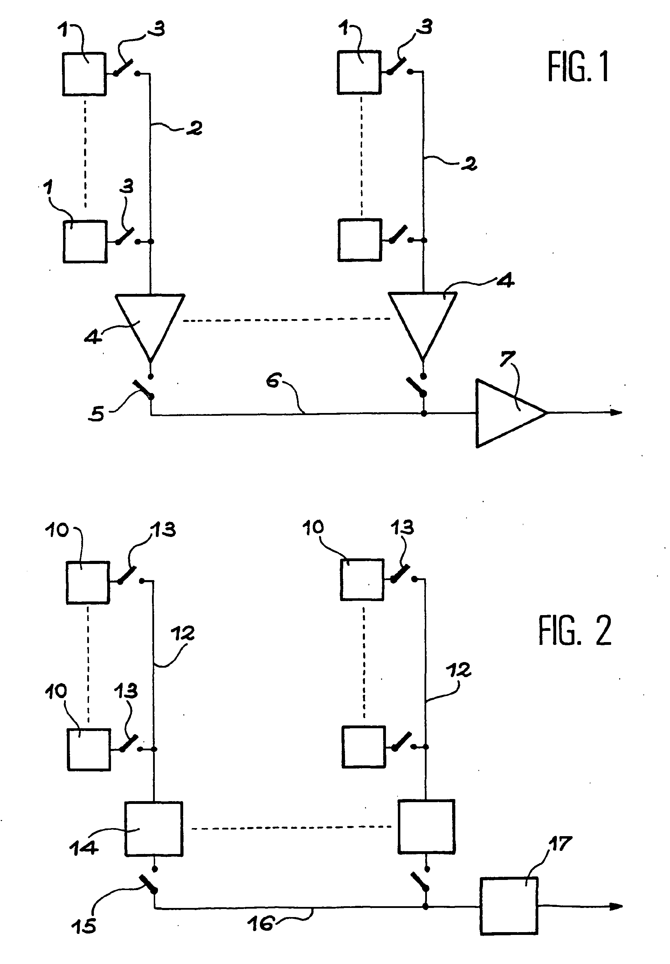

On a représenté sur la figure 1, le schéma général d'un circuit de lecture comprenant des PELs, référencés 1, connectés en colonnes par des bus-colonnes, référencés 2. Chaque PEL est connecté sur le bus-colonne 2 par l'intermédiaire d'un interrupteur 3 qui assure le multiplexage des différents PEL sur le bus-colonne. Les signaux fournis par chaque PEL d'une colonne sont ensuite traités dans des moyens de traitement 4. Ces moyens de traitement peuvent être, par exemple, des amplificateurs câblés en suiveur ou encore des amplificateurs transimpédance qui réalisent l'intégration déportée en bout de colonne lorsqu'elle n'est pas exécutée dans le PEL. Ils sont connectés par un interrupteur 5 sur un bus-ligne 6. L'ensemble des signaux fournis par les différents bus-colonnes 2 sont ensuite introduits dans un étage de sortie 7. Ainsi, les sorties des bus-colonnes 2 se partagent, tour à tour, le bus-ligne 6, lui-même connecté à l'entrée de l'étage de sortie 7. Cet étage de sortie conduit les informations qu'il a reçues vers la sortie du senseur.

Les senseurs sont généralement de type analogique. Dans ce cas, le principe d'acheminement de l'information vers la sortie du senseur repose sur un multiplexage en deux étapes, c'est-à-dire un multiplexage des PELs sur le bus-colonne, puis un multiplexage des bus-colonnes sur le bus-ligne. La fréquence du multiplexage des bus-colonnes est supérieure à la fréquence de multiplexage des PELs. La bande passante du PEL est donc inférieure à celle du moyen de traitement 4, elle-même inférieure à celle de l'étage de sortie 7. Il s'opère alors un repliement des spectres des bruits de tous les blocs de la chaîne analogique, ce qui a pour conséquence une dégradation des performances de photodétection. En outre, le bruit des alimentations peut dégrader les performances du circuit, cela pouvant causer des répercussions sur l'électronique de proximité (filtrage des alimentations, choix d'alimentation bas-bruit). De plus, le bruit intrinsèque du transistor impose des contraintes sur les dimensions de ces derniers. En règle générale, un transistor sera d'autant moins bruyant que ses dimensions seront grandes.

Par ailleurs, les interférences électromagnétiques polluent les signaux analogiques et imposent parfois des contraintes concernant le classement et le routage des éléments du circuit de lecture.

De plus, les variations de température modifient les fonctions de transfert des blocs analogiques. Un exemple représentatif de l'état de la technique qui vient d'être décrit figure dans le brevet australien AU 199 747 061 B2.

Ce brevet décrit un capteur d'images localement auto-adaptatif.

En liaison avec la figure 1 et sa description page 12, il est décrit :

Un circuit détecteur 01, 02 qui charge une capacité 05 au travers d'un interrupteur commandable 04. La tension délivrée par la capacité 05 est introduite sur une entrée 06 d'un comparateur 07 qui reçoit sur son autre entrée une valeur de comparaison Ucomp 08. La sortie du comparateur 07 commande d'une part l'interrupteur 04 et d'autre part un interrupteur 12 qui sera commenté plus loin. Ainsi, l'intégration du signal d'un pixel cesse après un signal d'horloge 09 suivant l'instant auquel la valeur présente à l'entrée du comparateur est égale à la valeur de comparaison.

Le résultat de la comparaison n'apparaît en sortie 10 du comparateur 07 qu'après passage dudit signal d'horloge 09. Simultanément à l'intégration du signal en provenance du pixel, une rampe constituée par une tension montant par pas est appliquée au travers d'un interrupteur 12 à une capacité 13. L'interrupteur 12 est commandé à l'ouverture en même temps que l'interrupteur 04. La tension 14 aux bornes de la capacité 13 est ainsi représentative de la valeur du signal de la rampe au moment de l'interruption (voir page 12, second paragraphe et figure 1). Il est indiqué ensuite page 13 que le signal 6 dit « de pixel » est envoyé sur une ligne de lecture 18 et que le signal analogique par nature en provenance de la capacité 13 est envoyé sur une ligne de lecture 19.

Il n'y a pas dans ce document utilisation du comparateur 07 pour obtenir un signal numérique représentatif de la charge du pixel.

Pour éviter ces différents inconvénients, des senseurs numériques ont été réalisés. Ces senseurs numériques présentent l'avantage de fournir un signal de sortie du senseur déjà numérisé, et donc une interface simplifiée. De plus, cette sortie est directement interprétable par des cartes de proximité numériques.

Par ailleurs, les senseurs numériques sont moins sensibles aux dérives et aux bruits des alimentations et sont plus robustes aux interférences électromagnétiques intra-circuit. De plus, le signal numérique ne subit aucune dégradation dans sa transmission entre les différents blocs fonctionnels. En outre, ces senseurs numériques sont moins sensibles aux dérives en température.

L'article intitulé "A 10-bit 20-Msample/s ADC for low-voltage, low-power applications", de G. SOU et al., EUROPTO Conférence on Advanced Focal Plane Arrays and Electronic Cameras, Zurich, May 1998, SPIE, vol. 3 410, décrit un senseur numérique, dans lequel la conversion analogique/numérique se fait au niveau de l'étage de sortie. Dans ce senseur, un convertisseur analogique/numérique est implanté en sortie du circuit de lecture. Autrement dit, ce convertisseur se substitue à l'étage de sortie, référencé 7 sur la figure 1, et sa sortie constitue la nouvelle interface numérique avec l'électronique de proximité. Cependant, ce convertisseur doit nécessairement fonctionner à la fréquence vidéo.

L'article "A Low-Power Digital Camera-on-a-Chip Implemented in CMOS Active Pixel Approach", de B. PAIN et al., 12th International Conférence on VLSI Design, January 1999, décrit un senseur dans lequel un convertisseur analogique numérique est placé en bout de colonne. Ce convertisseur se substitue donc au moyen de traitement 4 de la figure 1. L'étage de sortie 7 est alors une mémoire tampon (ou buffer) de signaux numériques. Par rapport au dispositif précédent, celui-ci à l'avantage d'avoir une fréquence de conversion inférieure à la fréquence vidéo. Par contre, son placement et son routage doivent être réalisés dans le pas de la matrice. De plus, il nécessite un nombre important de convertisseurs, puisqu'il doit y avoir autant de convertisseurs que de colonnes.

Les deux dispositifs qui viennent d'être décrits présentent, de plus, l'inconvénient de convertir les signaux analogiques provenant des PELs, relativement "loin", dans le circuit de lecture. Autrement dit, l'information collectée par les photodétecteurs n'est convertie en signal numérique qu'après avoir été acheminée en fin de colonne ou au niveau de l'étage de sortie du senseur. Ces informations ont donc déjà pu être dégradées, pendant leur acheminement jusqu'au convertisseur ; c'est alors un signal analogique dégradé qui est converti en signal numérique.

Pour éviter ce dernier inconvénient, des dispositifs proposent d'effectuer la conversion analogique/numérique au niveau des PELs. Cependant, cette conversion analogique en numérique ne peut se faire en implantant intégralement un convertisseur analogique/numérique dans chaque PEL. En effet, son placement et son routage sont fortement limités par les dimensions du pas du PEL, dans les deux dimensions de la matrice.

Les brevets US-A-5 659 315 et US-A-5 248 971 proposent de remédier à ce problème de place en intégrant le premier module d'un convertisseur analogique/numérique dans le PEL. Le convertisseur est donc réparti entre le PEL et l'extrémité de la colonne. Un comparateur est donc partagé entre l'ensemble des PELs de la colonne. Dans ce cas, la conversion analogique/numérique n'est effective qu'en sortie du convertisseur situé à l'extrémité des colonnes. Cette architecture implique que chaque PEL reçoit une consigne issue du module de conversion, ce qui augmente considérablement la complexité du dispositif et les risques de provoquer des couplages inter-PELs.

La demande de brevet EP-A-0 954 167 propose également de convertir le signal analogique au niveau du PEL. Plus précisément, ce document propose un PEL avec une sortie digitale. Dans ce cas, la conversion est de type simple rampe classique. La rampe de tension est de type analogique ; la conversion est effectuée après la prise d'image. Ce dispositif présente l'inconvénient de faire la conversion analogique/numérique après la prise d'image (ce qui peut limiter le nombre d'images par seconde), mais également de devoir acheminer une consigne sous la forme d'une tension analogique variable vers chaque PEL.

**Exposé de l'invention**

L'invention a justement pour but de remédier aux inconvénients des techniques décrites précédemment. A cette fin, elle propose un procédé pour convertir un signal analogique, représentatif d'une valeur électrique, en un signal numérique, cette conversion se faisant au plus près du photodétecteur, c'est-à-dire dans un PEL intégrateur. Le procédé de l'invention consiste à scruter l'état de sortie de chaque PEL, ligne après ligne, au cours d'une prise de vue, sur un seul bus pour l'ensemble des PELs d'une colonne.

Plus précisément, l'invention concerne un procédé de conversion d'un signal analogique représentatif d'une valeur électrique en un signal numérique, consistant à intégrer ce signal analogique et à comparer ce signal analogique intégré à une valeur de seuil prédéterminée. Ce procédé se caractérise par le fait qu'il consiste à scruter M fois un résultat logique acquis à l'étape de comparaison depuis le début du temps d'intégration jusqu'à la fin du temps d'intégration, un signal numérique obtenu en sortie de l'étape de comparaison, ayant une première valeur binaire lorsque le signal intégré est inférieur ou égal à la valeur seuil et une seconde valeur binaire lorsque le signal intégré est supérieur à la valeur seuil.

Avantageusement, le procédé de l'invention consiste à déterminer une durée entre le début du temps d'intégration et l'instant du dépassement de la valeur seuil en fonction des valeurs binaires obtenues en sortie de l'étape de comparaison.

Ce procédé peut être réinitialisé à chaque début du temps d'intégration.

Selon un mode de réalisation de l'invention, la grandeur électrique est une charge électrique, le signal analogique intégré est un signal de tension et la durée entre le début du temps d'intégration et l'instant du dépassement de la valeur seuil est une image du courant.

L'invention concerne également un dispositif de photodétection utilisant ce procédé. Elle concerne, plus précisément, un dispositif de conversion d'un signal analogique en signal numérique, utilisable dans un dispositif de photodétection.

Ce dispositif de conversion d'un signal analogique représentatif des charges résultant de la photodétection de rayonnements électromagnétique en un signal numérique, comporte une pluralité de photodétecteurs connectés en lignes et en colonnes par l'intermédiaire de bus, les photodétecteurs d'une même colonne partageant un même bus-colonne, lui-même connecté à un étage de sortie par l'intermédiaire d'un bus-ligne. Ce dispositif se caractérise par le fait qu'il comporte, entre chaque photodétecteur et le bus-colonne :

- un intégrateur apte à intégrer les charges provenant du photodétecteur ;
- des moyens d'initialisation de l'intégrateur ; et
- un comparateur pour comparer la tension issue de l'intégrateur avec une tension seuil prédéfinie interne.

Avantageusement, les moyens d'initialisation comprennent une source de tension associée à un interrupteur.
L'intégrateur peut être un condensateur.

**Brève description des figures**

- La figure 1, déjà décrite, représente un circuit de lecture analogique, classique ;
- la figure 2 représente schématiquement un circuit de lecture comportant le dispositif de conversion analogique/numérique de l'invention ;
- la figure 3 représente schématiquement un PEL, tel qu'utilisé dans le dispositif de l'invention ;
- la figure 4 représente le schéma électrique du PEL de la figure 3 ;
- la figure 5 représente le chronogramme de signaux obtenus dans un PEL du dispositif de l'invention ; et
- la figure 6 représente un exemple de réalisation d'un PEL du dispositif de l'invention.

**EP 1 290 869 B1**

**Description détaillée de modes de réalisation de l'invention**

L'invention concerne un procédé pour convertir un signal analogique résultant d'une photodétection en un signal numérique, cette conversion devant se faire le plus en amont possible dans la chaîne de traitement du signal.

Pour cela, l'invention propose de scruter, ligne après ligne, l'état de sortie de chaque PEL sur un seul bus pour tous les PEL d'une même colonne. Autrement dit, le procédé de l'invention consiste à scruter la quantité de charges obtenue au cours de leur intégration, de façon répétitive, afin de connaître l'instant où cette quantité atteint une valeur seuil prédéterminée.

La durée nécessaire pour atteindre cet instant où la quantité de charge intégrée atteint la valeur seuil, est en fait une image de la valeur du débit de ces charges, c'est-à-dire une image du courant ; cette durée est obtenue sous forme d'un code binaire.

Ce procédé de l'invention est mis en oeuvre dans un circuit de lecture, destiné à lire les charges électriques produites par les photodétecteurs à réception des rayonnements électromagnétiques et, en particulier, de rayonnements infrarouges.

Le circuit de lecture permettant de mettre en oeuvre ce procédé est représenté sur la figure 2. Ce circuit de lecture comporte une matrice de PEL, référencés 10, et connectés en colonne par un bus 12. Ce bus-colonne 12 est un bus partagé par tous les PEL d'une même colonne. Chaque PEL 10 est donc connecté sur un bus 12 par l'intermédiaire d'un interrupteur 13 assurant un multiplexage des informations fournies par les différents PEL. Chaque bus-colonne 12 est connecté à son extrémité à un moyen de traitement numérique 14 assurant le traitement numérique des signaux provenant des PELs de la colonne. Les sorties des différents moyens de traitement numérique 14 sont multiplexées par l'intermédiaire d'interrupteurs 15 pour atteindre un étage de sortie 17. L'information provenant de ces moyens de traitement numérique 14 est acheminée vers l'étage de sortie 17 par l'intermédiaire d'un second bus partagé, appelé "bus-ligne" et référencé 16.

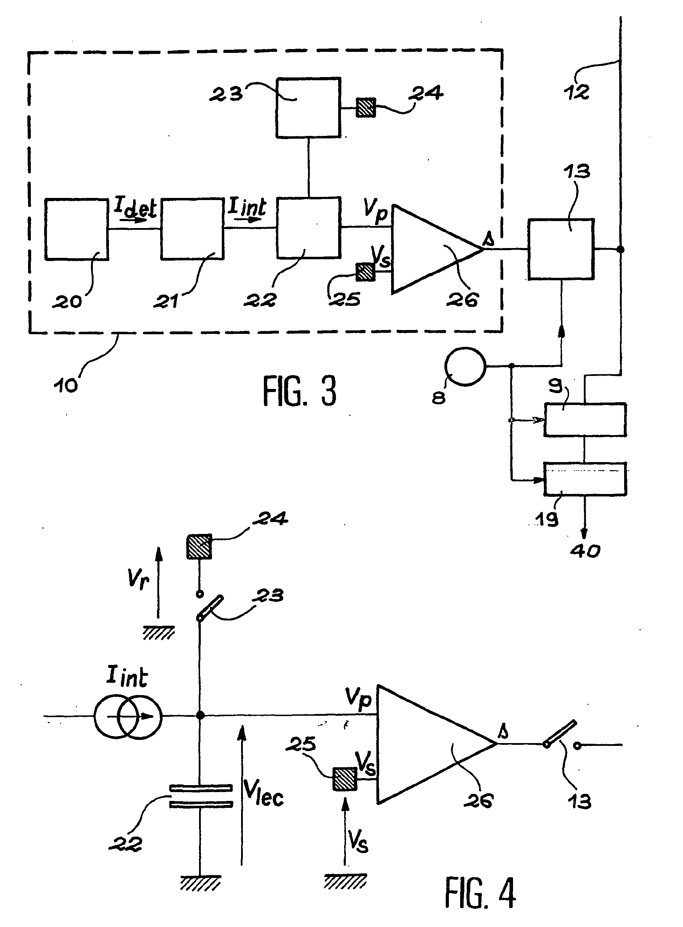

Sur la figure 3, on a représenté schématiquement un des PEL 10 du circuit de lecture de la figure 2.

Ce PEL 10 comporte un photodétecteur 20 couplé à un intégrateur 22 par l'intermédiaire de moyens d'adaptation d'impédance, référencés 21. Par exemple, l'intégrateur 22 peut être un condensateur.

Le photodétecteur 20 délivre un courant $I_{det}$ qui devient $I_{int}$, en sortie des moyens d'adaptation d'impédance 21. La sortie de l'intégrateur 22 est connectée sur une des entrées $V_p$ d'un comparateur 26, caractérisé par une tension seuil $V_s$. Pour une meilleure compréhension, cette tension $V_s$ est, dans cette figure, imposée par une source de tension externe 25. Elle peut aussi être définie par les caractéristiques internes du comparateur (c'est-à-dire les caractéristiques intrinsèques des transistors formant le comparateur) et ne pas nécessiter de source de tension externe.

La tension issue de l'intégrateur 22 est comparée par le comparateur 26 à cette tension seuil $V_s$. Le résultat de cette comparaison est obtenu sur la sortie s de ce comparateur 26 sous forme de valeurs binaires. Si la tension $V_p$ du signal issu de l'intégrateur 22 est inférieure à la tension seuil $V_s$, alors la valeur binaire engendrée par le comparateur 26, est 0. Par contre, dès que la tension $V_p$ devient supérieure ou égale à la tension seuil $V_s$, alors la sortie du comparateur 26 passe à 1. La valeur obtenue en sortie du PEL 10 est donc 0 ou 1, selon que la tension du signal relatif à la photodétection est, respectivement, supérieure ou bien est inférieure ou égale à une tension seuil prédéfinie. La valeur logique, présente en sortie s du comparateur 26, est scrutée régulièrement de façon périodique au rythme d'une horloge 8, commandant l'interrupteur 13, un circuit de traitement binaire 9, par exemple, une mémoire chargée par des valeurs au rythme de l'horloge ou encore un registre à décalage recevant les valeurs logiques successives. Un convertisseur 19 numérique/numérique commandé par l'horloge 8 reçoit les valeurs binaires en provenance du moyen de traitement 9 et convertit la suite de 0 et 1 en valeurs numériques. Ainsi, la charge collectée par le photodétecteur 20 est convertie sous forme d'une suite binaire, c'est-à-dire en signal numérique, au niveau de la sortie du PEL, avant d'être injectée sur le bus-colonne.

En effet, comme montré sur la figure 3, la sortie s du comparateur 26 correspond à la sortie du PEL 10 et est connectée à un interrupteur 13 relié au bus-colonne 12.

Comme expliqué précédemment, l'intégrateur 22 permet de collecter les charges issues du photodétecteur 20. Toutefois, cet intégrateur doit être réinitialisé à chaque prise d'image. Cette réinitialisation de l'intégrateur 22 se fait grâce à des moyens d'initialisation 23 et 24. Ces moyens d'initialisation consistent en une source de tension 24 qui émet une tension constante $V_r$, à travers un interrupteur 23. Ainsi, entre chaque prise d'image, l'interrupteur 23 se ferme, de façon à évacuer les charges collectées dans l'intégrateur 22, pendant la prise de vue précédente. Cette étape permet de commencer une nouvelle intégration dans des conditions initiales, toujours identiques.

Sur la figure 4, on a représenté le schéma électrique correspondant au PEL 10 de la figure 3. Ce schéma montre que l'entrée $V_p$ du comparateur 26 est initialisée à la tension $V_r$ de la source de tension 24. Ainsi, lorsque l'interrupteur 23 est ouvert, le courant $I_{int}$ est intégré sur l'intégrateur 22. Lorsque la tension de lecture $V_{lec}$ aux bornes de l'intégrateur 22 franchit la valeur seuil, c'est-à-dire dès que la tension $V_{lec}$ devient supérieure ou égale à la tension de seuil $V_s$, alors la sortie s du comparateur 26 bascule.

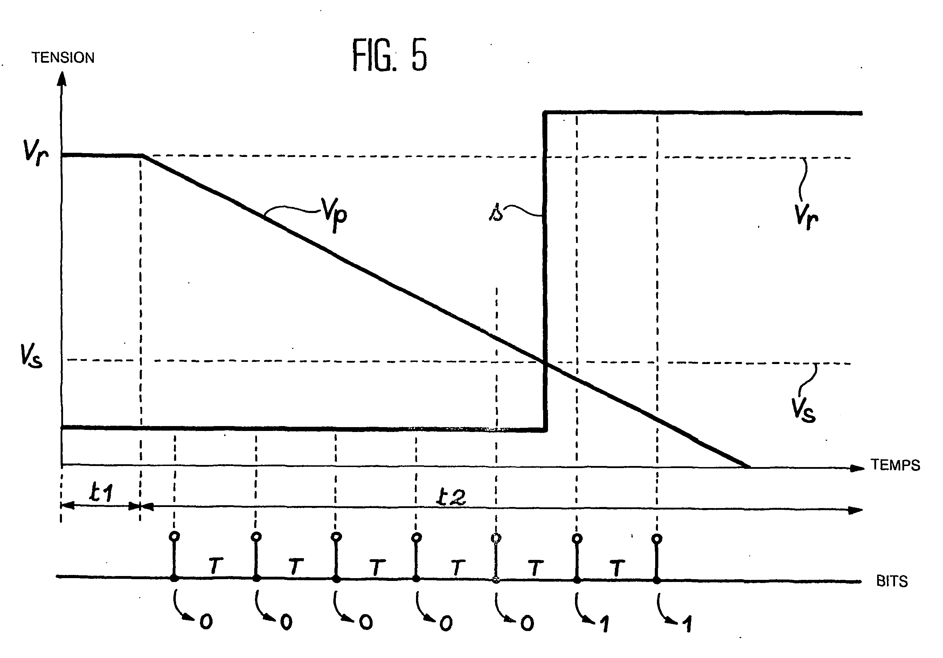

On a représenté sur la figure 5, le chronogramme des différents signaux obtenus dans le PEL 10 des figures 3 et 4. On voit, plus précisément, la tension de réinitialisation $V_r$ en pointillés, ainsi que la tension seuil $V_s$. La courbe $V_p$ montre la tension relative au signal issu du photodétecteur, c'est-à-dire la tension obtenue en sortie de l'intégrateur 22 et présente sur la première entrée du comparateur 26.

Pendant l'instant $t_1$, l'interrupteur est fermé ; la tension $V_p$ est donc à la valeur de la tension d'initialisation $V_r$. A l'instant où l'interrupteur 23 s'ouvre, la tension $V_p$ représente les charges provenant du photodétecteur et intégrées dans l'intégrateur 22. La courbe s montre le signal logique obtenu en sortie du comparateur 26. On voit donc que, tant que la valeur $V_p$ est supérieure à la tension seuil $V_s$, le signal logique est à 0 ; et dès que cette tension $V_p$ devient égale, puis inférieure, à la tension seuil $V_s$, alors le signal logique passe à 1.

I1 est à noter que le résultat de comparaison entre la tension $V_p$ et la tension $V_s$ par le comparateur 26 est scruté régulièrement, depuis le début du temps d'intégration jusqu'à la fin de ce temps d'intégration. Ces comparaisons sont répétées à intervalles réguliers T, pendant toute la durée d'une prise d'image. Ainsi, à chaque intervalle T, la sortie s du comparateur 26 fournit un bit de valeur 0 ou 1, formant une suite de bits qui pourra être codée ultérieurement.

Sur la figure 5; on a représenté les différents intervalles T, entre le début du temps d'intégration et la fin du temps d'intégration ; on a aussi noté les valeurs binaires obtenues à chaque scrutation de la comparaison lors de ces intervalles. On voit donc, sur cette figure 5, qu'avant d'atteindre le franchissement de la valeur seuil $V_s$ et, par conséquent, le basculement de la sortie s du comparateur 26 qui en découle, chaque scrutation, c'est-à-dire chaque valeur de bit obtenue sur la sortie s, renvoie un 0 logique sur le bus-colonne 12. Lorsque le seuil $V_s$ est atteint et dépassé, la sortie s change d'état logique ; les scrutations envoient alors la valeur binaire 1 sur le bus-colonne 12.

Le temps de lecture, ou temps d'intégration, est ainsi converti sous la forme d'un train de bits. Dans l'exemple de la figure 5, ce train de bits est constitué de sept bits : 0000011.

En fait, ce train de bits correspond au temps nécessaire au basculement de la sortie s du comparateur 26. Autrement dit, c'est ce temps de lecture $t_{lec}$ que le procédé de l'invention permet de déterminer. D'après les figures 3 et 4, ce temps $t_{lec}$ s'exprime de la façon suivante :

$$t_{lec} = \frac{C_{lec} \cdot (V_r - V_s)}{I_{int}}$$

où $C_{lec}$ est la capacité associée au condensateur 22 et $I_{int}$ le courant intégré représentatif de la quantité de photons reçus par le photodétecteur.

Il est à noter que puisque chaque PEL d'une même colonne partage un même bus-colonne, le résultat obtenu à la sortie s du PEL est mis à disposition sur le bus-colonne de façon multiplexée, c'est-à-dire qu'à un instant donné, un seul PEL de la colonne met son information à disposition sur le bus-colonne, tous les autres PEL de la même colonne ayant leur interrupteur 13 ouvert.

Chaque bus-colonne d'une même matrice de PEL est multiplexée de la même façon, c'est-à-dire que les PEL d'une même ligne fournissent en même temps leurs informations sur le bus-colonne auquel ils sont associés. Lorsque les informations délivrées par l'ensemble des PELs d'une même ligne ont été traitées en bout de colonne par le moyen de traitement 14, la ligne suivante de PEL est sélectionnée afin de procéder à une nouvelle scrutation. Lorsque la dernière ligne de la matrice de PEL a été traitée, on sélectionne à nouveau la première ligne de cette matrice et ainsi de suite. L'arrêt de la scrutation est effectué lorsque le temps d'intégration est terminé, c'est-à-dire lorsque la prise d'image est terminée.

Comme expliqué précédemment, l'information circulant sur le bus-colonne 12 correspond à un train de bits. Ce train de bits débute normalement par un 0 et se termine par un 1. Toutefois, si le flux d'entrée est trop fort, il se peut que ce train de bits ne soit composé que de 1, la tension seuil étant franchie avant la première scrutation. Par opposition, si le flux d'entrée est trop faible et n'atteint donc pas le seuil de commutation avant la fin du temps d'intégration, le train de bits peut être composé uniquement de 0.

Afin de pouvoir être traité, ce train de bits est converti en codes binaires constitués d'un nombre de bits inférieur à celui du train obtenu par la scrutation. Le train de bits peut être codé selon différents types de codage, et, par exemple, il peut être codé dans le convertisseur 19 sur trois bits selon la table de correspondance ci-dessous :

| Train de bits | Ecriture du code |
| --- | --- |
| 0000000 | 000 |
| 0000001 | 001 |
| 0000011 | 010 |
| 0000111 | 011 |

(suite)

| Train de bits | Ecriture du code |
|---------------|------------------|
| 0001111 | 101 |
| 0011111 | 110 |
| 0111111 | 110 |
| 1111111 | 111 |

D'une manière générale, pour coder le train de bits obtenu par scrutations au cours d'une prise d'image sur N bits, il faut $2^N$-1 scrutations. Par exemple, pour un codage sur 12 bits, il- faudra $2^{12}$-1 scrutations, soit 4 095 scrutations pour chaque PEL.

Ce codage, sur N bits, des $2^N$-1 valeurs binaires issues de $2^N$-1 scrutations est réalisé par les moyens de traitement 14 et, ceci, pour chaque PEL de la matrice. Pour cela, l'invention propose qu'à chaque PEL, soit associé un moyen de traitement 19 de N bits présent sur le circuit. Ainsi, à chaque scrutation d'un PEL, il faut, dans un premier temps, lire la valeur précédente inscrite dans une mémoire qui lui est affectée, lui ajouter le résultat digital de la scrutation présente sur le bus-colonne 12, puis réécrire dans la mémoire, la valeur obtenue à l'issue de cette addition. Il s'agit bien d'une addition d'un mot binaire de N bits, présent dans la mémoire, avec un mot binaire de 1 bit, présent sur le bus-colonne 12. Lorsque les $2^N$-1 scrutations ont été effectuées, $2^N$-1 additions ont été réalisées, et ceci pour chaque PEL du circuit. L'ensemble des mémoires de N bits du circuit renferme alors le résultat de la conversion analogique numérique du signal intégré sur chaque PEL. Ces mots de N bits sont alors acheminés par le bus-ligne vers la sortie du senseur 17.

Ainsi, on voit que le convertisseur numérique 19 convertit la suite de M valeurs binaires stockées dans les moyens de traitement en une valeur numérique sur un nombre de bits plus petit que M.

Comme on l'a compris à la lecture de ce qui précède, la conversion du signal analogique issu du photodétecteur 20 est effectuée au niveau du comparateur 26. Ainsi, seul le signal évoluant entre la sortie du photodétecteur 20 et l'entrée du comparateur 26 est de type, analogique. Dès la sortie s du comparateur 26, ce qui correspondant à la sortie du PEL 10, le signal est numérique. Il est donc transmis sous forme numérique au bus-colonne 12 et à tous les moyens de traitement constitués ultérieurement dans le circuit de lecture. Autrement dit, aucune information dynamique de type analogique n'est requise pour le fonctionnement de ces dispositifs de conversion. Seuls, les interrupteurs 13 et 21 et les tensions d'alimentation respectives suffisent à son utilisation. Un minimum de stimulis suffit donc à assurer le bon fonctionnement de ce senseur numérique.

En outre, ce senseur numérique a l'avantage de pouvoir être facilement modifiable, c'est-à-dire facilement transformable pour une application ou pour une autre, car, seules, les valeurs du condensateur 22 et des tensions $V_r$ et $V_s$, sont à redéfinir pour garantir une même fonction de transfert, conforme à l'équation donnée précédemment. Ce senseur est donc compatible avec des technologiques, dites « basses tensions », ainsi qu'avec des technologies SOI (Silicone On Insulator) car peu d'éléments électriques traitent des grandeurs analogiques.

Comme décrit précédemment, le principe de lecture du PEL 10 repose sur le franchissement du seuil de comparaison $V_s$. C'est l'instant $t_{lec}$ du franchissement de ce seuil qui permet de coder le courant photonique d'entrée, en temps. Ainsi, quel que soit le courant $I_{int}$, le nombre de charges intégrées dans l'intégrateur 22 est identique.

Si on appelle $Q_{max}$ la charge totale maximum qui peut être stockée dans l'intégrateur, alors :

$$Q_{max}=q.N_{max}=C_{lec}.(V_r-V_s) = I_{int}.t_{lec}$$

où q est la charge d'un électron (q = 1.6e-19 C) et $N_{max}$ le nombre maximum de charges correspondant à $Q_{max}$.

Si les détecteurs sont de type quantique, alors la valeur efficace du bruit associé à une photodiode intégrant N charges sur un condensateur est donnée par l'équation suivante :

$$Bruit_{détecteur}=\sqrt{N}$$

Ainsi, pour $N_{max}$ charges intégrées dans le PEL, on obtient un rapport signal/bruit (S/B) constant, qui s'exprime par la relation :

$$S \ / \ B \ = \ \frac{N_{max}}{\sqrt{N_{max}}} \ = \ \sqrt{N_{max}} \ = \ \sqrt{\frac{C_{lec} \cdot (V_r - V_s)}{q}}$$

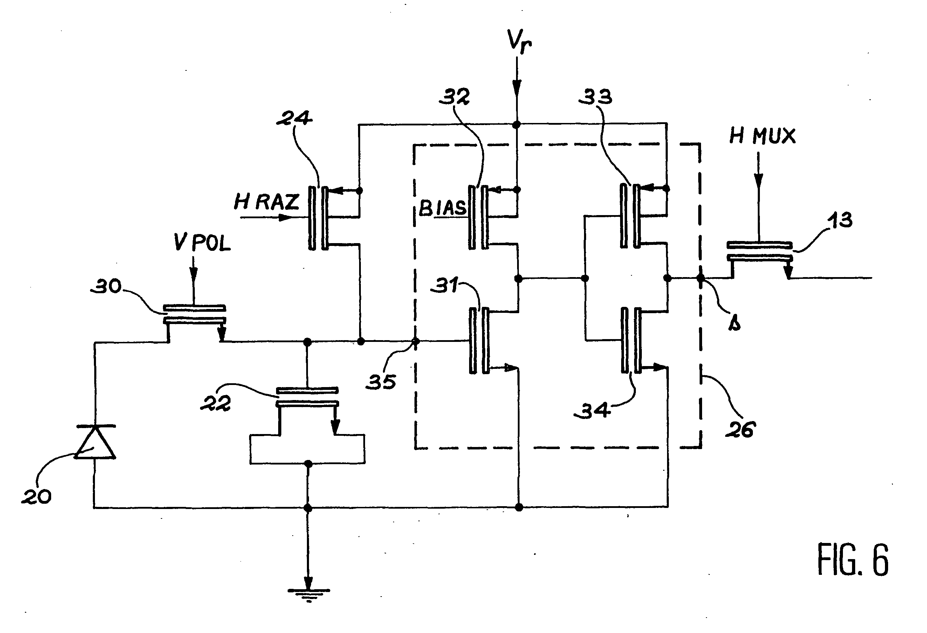

Sur la figure 6, on a représenté un exemple de circuit de câblage d'un PEL du dispositif de l'invention. Sur cette figure, le photodétecteur est référencé 20, comme sur la figure 3. Un transistor 30 assure le couplage du photodétecteur 20 avec le noeud d'intégration, référencé 35 sur cette figure 6. Les charges issues du photodétecteur 20 sont accumulées dans l'intégrateur 22 ; le transistor 24 assure l'initialisation du noeud 35 à la tension $V_r$. Le signal VPOL correspond à la tension de polarisation du transistor de couplage 30 et HRAZ au signal d'horloge de réinitialisation ; HRAZ est commun pour l'ensemble des PELs de la matrice.

Dans cet exemple de la figure 6, le comparateur 26 est réalisé, grâce aux transistors 31, 32, 33 et 34, qui fournissent, à leur sortie s, le signal logique du PEL. Cette sortie s est connectée à l'interrupteur 13, lui-même connecté sur le bus-colonne. La commande HMUX assure la validation de l'interrupteur 13 ; cette commande HMUX est le signal d'horloge du multiplexage ; elle est commune à l'ensemble des PELs d'une même ligne. Les signaux VPOL et BIAS sont des tensions de polarisation continues et $V_r$ est la tension d'initialisation du noeud 35, mais aussi, dans cette réalisation, la tension d'alimentation positive du comparateur 26.

Selon une variante de l'invention, il est possible de fournir, à chaque ligne de la matrice, un signal HRAZ qui lui est propre. En effet, le signal HRAZ d'horloge des condensateurs d'intégration 22 est identique pour l'ensemble des PELs de la matrice. Ainsi, l'intégration débute au même instant pour tous les PELs. Or, il est intéressant que seuls les PELs, d'une même ligne, soient scrutés de manière synchrone. Pour cela, il suffit que chaque ligne de PEL ait son propre signal de réinitialisation.

## Revendications

1.  Procédé de conversion d'un signal analogique représentatif d'une grandeur électrique en un signal numérique, consistant:

    à intégrer ce signal analogique;
    à comparer, dans une étape de comparaison, le signal analogique intégré à une valeur de seuil prédéterminée, ladite étape de comparaison fournissant une première valeur binaire lorsque le signal analogique intégré est inférieur ou égal à la valeur de seuil et une seconde valeur binaire lorsque le signal analogique intégré est supérieur à la valeur de seuil **caractérisé en ce qu'**il consiste à :

    - effectuer $2^N$-1 fois, à intervalles réguliers (T), ladite étape de comparaison, depuis un début de temps d'intégration jusqu'à une fin de temps d'intégration, pour obtenir un train de $2^N$-1 valeurs binaires successives, en sortie de l'étape de comparaison ;
    - stocker le train de $2^N$-1 valeurs binaires successives dans une mémoire, le signal numérique étant constitué par le train de $2^N$-1 valeurs binaires ainsi stocké.

2.  Procédé selon la revendication 1, **caractérisé en ce qu'**il consiste à déterminer une durée $t_{lec}$ entre le début du temps d'intégration et l'instant du dépassement de la valeur seuil, en fonction des valeurs binaires obtenues en sortie de l'étape de comparaison.

3.  Procédé selon la revendication 1 ou 2, **caractérisé en ce que** la grandeur électrique est une charge, le signal analogique intégré est un signal de tension et la durée $t_{lec}$ entre le début du temps d'intégration et l'instant du dépassement de la valeur seuil est une image du courant.

4.  Procédé selon l'une quelconque des revendications 1 à 3, **caractérisé en ce qu'**il est réinitialisé à chaque début du temps d'intégration.

5.  Dispositif de conversion d'un signal analogique représentatif des charges résultant de la photodétection de rayonnements électromagnétiques en un signal numérique, comportant :

    - une pluralité de photodétecteurs (10) connectés en lignes et en colonnes par l'intermédiaire de bus (12, 16), les photodétecteurs d'une même colonne partageant un même bus-colonne (12), lui-même connecté à un étage de sortie (17) par l'intermédiaire d'un bus-ligne (16), et entre chaque photodétecteur et le bus-colonne ;

- un intégrateur (22) apte à intégrer les charges provenant du photodétecteur entre un début de temps d'intégration jusqu'à une fin de temps d'intégration;
- des moyens d'initialisation de l'intégrateur (23, 24) ;
- une horloge (8) constituée de signaux d'horloge à intervalles réguliers; et
- un comparateur (26) pour comparer la tension (Vp) issue de l'intégrateur avec une tension seuil (V$_s$) prédéfinie interne et fournir une valeur binaire à chaque signal d'horloge (8);

**caractérisé en ce qu'**il comporte en outre une mémoire (9), commandée par ladite horloge, ladite mémoire (9) recevant et stockant une valeur binaire présente en sortie du comparateur (26) à chaque signal de l'horloge (8), le signal numérique relatif à un photodétecteur étant constitué par le train de valeurs binaires ainsi stockées.

6. Dispositif selon la revendication 5, **caractérisé en ce que** les moyens d'initialisation comprennent une source de tension associée à un interrupteur.

7. Dispositif selon la revendication 5 ou 6, **caractérisé en ce que** l'intégrateur est un condensateur.

8. Dispositif selon la revendication 7, **caractérisé en ce qu'**il comporte en outre un convertisseur numérique/numérique (19) commandé par l'horloge (8) pour convertir une suite de valeurs binaires stockées dans la mémoire (9) en une valeur numérique sur un nombre de bits plus petit que le nombre de valeurs binaires du train de valeurs binaires stockées dans ladite mémoire (9).

**Claims**

1. Process for converting an analogue signal representing an electrical quantity into a digital signal consisting in:

    integrating this analogue signal;
    comparing, in a comparison step, the integrated analogue signal with a predetermined threshold value, said comparison step providing a first binary value where the integrated analogue signal is lower than or equal to said threshold value and provising a second binary value where the integrated analogue signal is greater than said threshold value, **characterized in that** it consists in:

    - performing said comparison step $2^N$-1 times, at regular intervals (T), from a start of the integration time until an end of the integration time, to obtain a series of $2^N$-1 successive binary values at the output of the comparison step;
    - storing said series of $2^N$-1 successive binary values in a memory, said digital signal being constituted by the series of $2^N$-1 successive binary values thus stored.

2. Process according to claim 1, **characterized in that** it consists in determining a duration $t_{lec}$ between the start of the integration time and the instant of exceeding the threshold value, as a function of the binary values obtained at the output of the comparison step.

3. Process according to claim 1 or 2, **characterized in that** the electrical quantity is a charge, the integrated analogue signal is a voltage signal and the duration $t_{lec}$ between the start of the integration time and the instant of exceeding the threshold value is an image of the current.

4. Process according to any of claims 1 to 3, **characterized in that** it is reset each time the integration time starts.

5. Device for converting an analogue signal representing charges resulting from the photo-detection of electromagnetic radiation into a digital signal, comprising:

    - a plurality of photo-detectors 10 connected in rows and columns by means of buses (12, 16), the photodetectors in one column sharing the same column bus (12), itself connected to an output stage (17) by means of a row bus (16), and between each photodetector and the column bus :
    - an integrator (22) adpated to integrate the charges arriving from the photo-detector between a start of integration time until an end of integration time;
    - means for resetting the integrator (23, 24);
    - a clock (8) constituted by clock signals at regular intervals;

- a comparator (26) to compare the voltage ($V_p$) from the integrator with an internally predefined threshold voltage ($V_s$) and to provide a binary value at each clock signal (8);

**characterized in that** it also includes a memory (9) controlled by said clock, said memory (9) receiving and storing a binary value present at the output of the comparator (26) at each clock signal (8), the digital signal related to a photodetector being constituted by the series of binary values thus stored.

6. Device according to claim 5, **characterized in that** the means for resetting include a voltage source associated with a switch.

7. Device according to claim 5 or 6, **characterized in that** the integrator is a capacitor.

8. Device according to claim 7, **characterized in that** it also includes digital/digital converter (19) controlled by the clock (8) to convert a sequence of binary values stored in the processing device (9) into a numerical value encoded on a number of bits smaller than the number of logical values stored in the processing device (9).


**Patentansprüche**

1. Verfahren zum Umwandeln eines analogen Signals, das für eine elektrische Größe repräsentativ ist, in ein digitales Signal, das umfasst:

Dieses analoge Signal zu integrieren;
in einem Vergleichsschritt das integrierte analoge Signal mit einem vorbestimmten Schwellenwert zu vergleichen, wobei der Vergleichsschritt einen ersten binären Wert liefert, wenn das integrierte analoge Signal kleiner oder gleich dem Schwellenwert ist, und einen zweiten binären Wert, wenn das integrierte analoge Signal größer als der Schwellenwert ist, **dadurch gekennzeichnet, dass** es daraus besteht:

- $2^N$-1 mal in regelmäßigen Intervallen (T) den Vergleichsschritt von einem Integrationszeitanfang bis zu einem Integrationszeitende durchzuführen, um eine Folge von $2^N$-1 aufeinanderfolgenden binären Werten am Ausgang des Vergleichsschritts zu erhalten;
- die Folge von $2^N$-1 aufeinanderfolgenden binären Werten in einem Speicher abzuspeichern, wobei das digitale Signal durch die derart abgespeicherte Folge von $2^N$-1 binären Werten gebildet wird.

2. Verfahren nach Anspruch 1, **dadurch gekennzeichnet, dass** es umfasst, eine Dauer $t_{lec}$ zwischen dem Integrationszeitanfang und dem Augenblick des Überschreitens des Schwellenwerts als Funktion der binären Werte zu bestimmen, die am Ausgang des Vergleichsschritts erhalten werden.

3. Verfahren nach Anspruch 1 oder 2, **dadurch gekennzeichnet, dass** die elektrische Größe eine Ladung ist, dass das integrierte analoge Signal ein Spannungssignal ist, und dass die Dauer $t_{lec}$ zwischen dem Integrationszeitanfang und dem Augenblick des Überschreitens des Schwellenwerts ein Bild des Stroms ist.

4. Verfahren nach einem der Ansprüche 1 bis 3, **dadurch gekennzeichnet, dass** es bei jedem Integrationszeitanfang erneut initialisiert wird.

5. Vorrichtung zur Umwandlung eines analogen Signals, das repräsentativ ist für Ladungen, die aus der Photodetektion von elektromagnetischen Strahlen resultieren, in ein digitales Signal, umfassend:

- Eine Mehrzahl von Photodetektoren (10), die mittels Bussen (12, 16) in Zeilen und Spalten angeschlossen sind, wobei die Photodetektoren ein und derselben Spalte ein und denselben Spaltenbus (12) gemeinsam haben, der selbst wiederum an eine Ausgangsstufe (17) mittels eines Zeilenbus (16) angeschlossen ist, sowie zwischen jedem Photodetektor und dem Spaltenbus;
- einen Integrierer (22), der dazu ausgelegt ist, die vom Photodetektor stammenden Ladungen zwischen einem Integrationszeitanfang bis zu einem Integrationszeitende zu integrieren;
- Mittel (23, 24) zur Initialisierung des Integrierers;
- eine Uhr (8), die durch Uhrensignale mit regelmäßigen Intervallen gebildet ist; und
- einen Vergleicher (26) zum Vergleichen der aus dem Integrierer ausgegebenen Spannung ($V_p$) mit einer vordefinierten internen Schwellenspannung ($V_s$) und zum Liefern eines binären Werts bei jedem Uhrensignal (8);

**dadurch gekennzeichnet, dass** sie ferner einen durch die Uhr gesteuerten Speicher (9) umfasst, wobei der Speicher (9) einen binären Wert empfängt und speichert, der am Ausgang des Vergleichers (26) bei jedem Signal der Uhr (8) vorhanden ist, wobei das digitale Signal, das zu einem Photodetektor gehört, durch die Folge von derart abgespeicherten binären Werten gebildet ist.

6. Vorrichtung nach Anspruch 5, **dadurch gekennzeichnet, dass** die Initialisierungsmittel eine Spannungsquelle umfassen, die einem Unterbrecher zugeordnet ist.

7. Vorrichtung nach Anspruch 5 oder 6, **dadurch gekennzeichnet, dass** der Integrierer ein Kondensator ist.

8. Vorrichtung nach Anspruch 7, **dadurch gekennzeichnet, dass** sie ferner einen Digital/Digital-Wandler (19) umfasst, der durch die Uhr (8) gesteuert wird, um eine Folge von binären Werten, die in dem Speicher (9) abgespeichert sind, in einen digitalen Wert bei einer Zahl von Bits umzuwandeln, die kleiner ist als die Zahl von binären Werten der Folge von binären Werten, die in dem Speicher (9) abgespeichert sind.

FIG. 1

FIG. 2

FIG. 3

FIG. 4

FIG. 5

EP 1 290 869 B1

FIG. 6

## RÉFÉRENCES CITÉES DANS LA DESCRIPTION

**Documents brevets cités dans la description**

- AU 199747061 B2
- US 5659315 A
- US 5248971 A
- EP 0954167 A

**Littérature non-brevet citée dans la description**

- **G. SOU et al.** A 10-bit 20-Msample/s ADC for low-voltage, low-power applications. *EUROPTO Conférence on Advanced Focal Plane Arrays and Electronic Cameras, Zurich,* Mai 1998, vol. 3, 410
- **B. PAIN et al.** A Low-Power Digital Camera-on-a-Chip Implemented in CMOS Active Pixel Approach. *12th International Conférence on VLSI Design,* Janvier 1999